(19) **Europäisches Patentamt / European Patent Office / Office européen des brevets**

(11) **EP 2 585 870 B1**

(12) **EUROPEAN PATENT SPECIFICATION**

(45) Date of publication and mention
of the grant of the patent:
**01.08.2018 Bulletin 2018/31**

(21) Application number: **11727495.1**

(22) Date of filing: **28.06.2011**

(51) Int Cl.:
**G02B 27/22** *(2018.01)*    **H04N 13/00** *(2018.01)*

(86) International application number:
**PCT/EP2011/060792**

(87) International publication number:
**WO 2012/000979 (05.01.2012 Gazette 2012/01)**

(54) **VIEWING AID FOR STEREOSCOPIC 3D DISPLAY**

SEHHILFE FÜR STEREOSKOPISCHE 3D-ANZEIGE

AIDE À LA VISUALISATION DESTINÉE À UN AFFICHAGE 3D STÉRÉOSCOPIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2010  NO 20100935**

(43) Date of publication of application:
**01.05.2013  Bulletin 2013/18**

(73) Proprietor: **Sintef TTO AS
7465 Trondheim (NO)**

(72) Inventor: **MATHIASSEN, John Reidar
NO-7018 Trondheim (NO)**

(74) Representative: **Protector IP Consultants AS
Oscarsgate 20
0352 Oslo (NO)**

(56) References cited:
**EP-A1- 1 429 173      EP-A1- 1 564 566
US-A- 4 717 239       US-A- 5 589 982
US-A1- 2001 048 505   US-A1- 2007 236 809
US-A1- 2008 278 807**

**Description**

FIELD OF THE INVENTION

The present invention relates generally to eyewear used as a viewing aid for stereoscopic 3D displays, and more particularly to eyewear used for viewing stereoscopic 3D displays based on wavelength-division multiplexing.

BACKGROUND OF THE INVENTION

Several different methods exist for providing stereoscopic 3D images when viewing displays, such as shutter glasses where the two images are shown in a sequence and a shutter is placed in the glasses determining which image is to be shown to which eye, and polarizing glasses and projectors or screens where the glasses only transmits the right or left image to the corresponding eye. The disadvantage with shutter glasses requires that the glasses are active (requiring batteries), are dark (visible light transmission of 20 %) and have a limited refresh rate. The disadvantages of polarizing glasses are the need for polarization retention in the screen, making it difficult to obtain a high stereo extinction ratio, and the relatively low visible light transmission (40-45 %) in the glasses. A more promising method, herein called the "Infitec" method or approach, is discussed in multiple references (US 7,001,021 B2, EP 1 830 585 A2, WO 2004/038457 A2, WO 2008/061511 A1, WO 2009/026888 A1), as well as in the referenced articles "LED-Based 3D Displays with Infitec Technology" and "Interference-Filter-Based Stereoscopic 3D LCD". The Infitec approach to stereoscopic 3D displays uses interference filters for wavelength-division multiplexing in the display and demultiplexing in the glasses. Infitec has several good properties, including passive glasses, the use of standard projection screens and an excellent stereo extinction ratio. Wavelength-division multiplexing stereoscopic 3D displays of both the projection type and transmissive types exist in the prior art (see references). However, the filters used in Infitec approach, and other similar solutions, are angle-sensitive. This angle dependency puts big constraints on the design of the eyewear, since the angle-of-incidence of incident light must be as close to perpendicular as possible for all viewing directions. In the prior art, this problem is circumvented by having curved lenses at a distance from the eye (US 2007/0236809 A1, US 2008/0278807 A1) or flat lenses with a narrow field of view. Some prior art include large guard bands between the left-eye transmission spectrum and right-eye transmission spectrum, in order to compensate for the angle-dependent shift of the transmission spectrum in the glasses. The angle dependency leads to design choices with loss of display brightness, color distortions when viewing off-screen objects and a reduced common color gamut between the left-eye image and right-eye image. The angle dependency of the Infitec interference filters further constrains the location of the filters in the optical path of the display or projector. A further disadvantage of the Infitec approach is the relatively high cost of the glasses, compared to glasses used with polarization-based stereoscopic 3D displays. The high cost of the prior art Infitec glasses is due to the high number of dielectric layers required - on the order of 50-100 layers - to obtain a high stereo extinction ratio. The cost of coating glasses with interference filters is roughly proportional to the number of dielectric layers and the combined thickness of all these layers, and thus the large number of layers results in a high cost for the glasses. Thus, there is a need for a viewing aid for stereoscopic 3D displays that enables greater freedom in the design of the display/projector and viewing aid, while retaining the good properties of the Infitec method and reducing or removing the disadvantages discussed above.

SUMMARY OF THE INVENTION

It is an objective of the present invention to provide improvements to the prior art in eyewear used as a viewing aid for stereoscopic 3D displays, in particular for such displays using wavelength-division multiplexing. It is a further objective of the present invention to provide improvements to the prior art in stereoscopic 3D displays in general. These objectives are obtained with eyewear as described above and characterized as defined in the independent claims.

The present invention provides eyewear for viewing a stereoscopic 3D display, where said display uses wavelength-division multiplexing. The present invention provides optical assemblies in the eyewear for wavelength-selective filtering. In exemplary embodiments of the present invention, both the display and optical assemblies in the eyewear include thin-film interference filters, rugate notch filters or holographic notch filters. These filter types have transmission spectra that are highly dependent on the angle-of-incidence to the filters. This angle dependency is a problem in the prior art, and puts severe constraints on both the eyewear design and the location of the filters in the optical path of the display or projector. Exemplary embodiments of the present invention provide eyewear that ensures that the angle-of-incidence to the filters in the eyewear is as close to perpendicular (0 degrees incidence) as possible, thus avoiding some of the problems of the prior art for stereoscopic 3D displays using such filters in the eyewear. A second problem in the prior art is the need for a high stereo extinction ratio in the eyewear filters, and thus the need for a large number of dielectric layers in the filters. This problem is due to both left-eye and right-eye images being equally focused when viewing said images through both lenses of the eyewear. Exemplary embodiments of the present invention provide eyewear with wavelength-selective defocusing of the left-eye image in the right-eye lens of the eyewear and of the right-eye image in the left-eye lens of the eyewear. By means of wavelength-selective defocusing of the complementary image, the perceived image quality of the left-eye and right-eye images - and the stereoscopically fused image pair - can be high, even with a lower stereo extinction ratio than used in the prior art. In an exemplary embodiment of the present invention, the eyewear is suitable for viewing a stereoscopic 3D front-projection display. In another exemplary embodiment of the present invention, the eyewear is suitable for viewing a stereoscopic 3D transmissive flat-panel display with an edge-lit backlighting unit (BLU) using narrow-band LED or laser illumination.

The present invention thus is an improvement over the Infitec approach, by reducing the angle-dependency of the transmission spectra of the eyewear, and by reducing the need for very many layers in the filters. The present invention further improves the prior art by enabling greater design freedom with respect to choosing display and eyewear filter sets with increased brightness, larger color gamut, higher visible light transmission and less color distortions.

BRIEF DESCRIPTION OF THE DRAWINGS

The invention will now be described with reference to the accompanying figures, illustrating the invention by way of examples, in which:

FIG. 1 shows a block diagram of a stereoscopic 3D display; and
FIG. 2 shows a block diagram of a display unit of the projection display; and
FIG. 3 shows a block diagram of a display unit of the backlit transmissive display type; and
FIG. 4 shows a block diagram of a stereo illumination unit used in the stereoscopic 3D projection display system of FIG. 2 and in the stereoscopic 3D backlit transmissive display system of FIG. 3; and
FIG. 5 shows a diagram of the control signals for the stereo illumination unit of FIG. 4; and
FIG. 6 shows the relationship between the display unit imaging surface and the viewing aid, according to an exemplary embodiment of the present invention; and
FIG. 7 shows transmission spectra of the illumination combiner and viewing aid, according to an exemplary embodiment of the present invention; and
FIG. 8 shows transmission spectra of the illumination combiner and viewing aid, according to an exemplary embodiment of the present invention; and
FIG. 9 shows a photograph of prior art wavelength-demultiplexing glasses of the Infitec type; and
FIG. 10 shows a schematic illustration of the lenses of the prior art; and

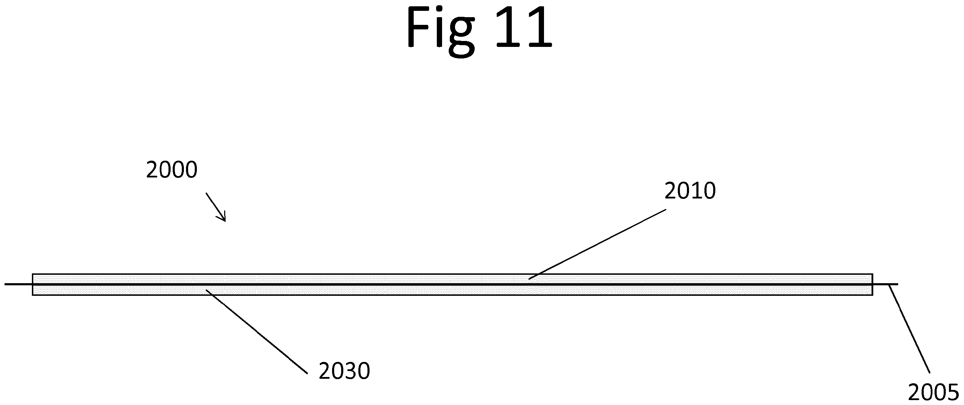

FIG. 11 shows the lens assembly, being of a flat type, of the lenses of the eyewear illustrated in FIG. 6, according to an exemplary embodiment of the present invention; and
FIG. 12 shows the lens assembly, being of a curved type, of the lenses of the eyewear illustrated in FIG. 6, according to an exemplary embodiment of the present invention; and
FIG. 18 shows the use of two diffractive lenses in the lens assembly of FIG. 11, according to an exemplary embodiment of the present invention; and
FIG. 19 shows the use of two diffractive lenses in the lens assembly of FIG. 11, according to an exemplary embodiment of the present invention; and
FIG. 20 shows the use of two diffractive lenses in the lens assembly of FIG. 11, according to an exemplary embodiment of the present invention; and
FIG. 21 shows the transmission spectrum of display filters included in an example filter set, according to an exemplary embodiment of the present invention; and
FIG. 22 shows the diffraction efficiency of a first multi-order diffractive lens included in an example lens set, according to an exemplary embodiment of the present invention; and
FIG. 23 shows the diffraction efficiency of a second multi-order diffractive lens included in an example lens set, according to an exemplary embodiment of the present invention; and
FIG. 24 shows the transmission spectrum of the left-eye display filter and right-eye eyewear filter, included in an example filter set, according to an exemplary embodiment of the present invention; and
FIG. 25 shows the transmission spectrum of the right-eye display filter and left-eye eyewear filter, included in an example filter set, according to an exemplary embodiment of the present invention;

The following reference numerals are used in the specification and drawings:

| Number | Name | Context |
|---|---|---|
| 10 | Stereoscopic 3D display system | |
| 11 | Left-eye image data | In stereoscopic 3D display system 10 |

(continued)

| Number | Name | Context |
|---|---|---|
| 12 | Right-eye image data | In stereoscopic 3D display system **10** |
| 13 | Display unit | In stereoscopic 3D display system **10** |
| 14 | Eyewear | In stereoscopic 3D display system **10** |
| 15 | Left eye | In stereoscopic 3D display system **10** |
| 16 | Right eye | In stereoscopic 3D display system **10** |
| 101 | Stereo illumination unit | In display unit **13** |
| 102 | Illumination optics | In projection-display embodiments of display unit **13** |
| 103 | Spatial light modulator(s) | In projection-display embodiments of display unit **13** |
| 104 | Projection optics | In projection-display embodiments of display unit **13** |
| 105 | Screen surface | In projection-display embodiments of display unit **13** |
| 112 | Backlight illumination optics | In transmissive-display embodiments of display unit **13** |
| 113 | Transmissive display panel | In transmissive-display embodiments of display unit **13** |
| 201 | Left-eye illumination source | In stereo illumination unit **101** |
| 202 | Right-eye illumination source | In stereo illumination unit **101** |
| 203 | Illumination combiner | In stereo illumination unit **101** |
| 221 | Left-eye illumination source control signal | Control signal for left-eye illumination source **201** |
| 222 | Right-eye illumination source control signal | Control signal for right-eye illumination source **202** |
| 130 | Display unit imaging surface | Imaging surface of display unit **13** |
| 2100 | Spatial imaging element | Small spatial region of display unit imaging surface **130** |
| 2101 | Left-eye targeted light ray bundle | Light ray bundle from spatial imaging element **2100** to left eye **15** |
| 2102 | Right-eye targeted light ray bundle | Light ray bundle from spatial imaging element **2100** to right eye **16** |
| 2001 | Left-eye lens | Lens over left-eye portion of eyewear **14** |
| 2002 | Right-eye lens | Lens over right-eye portion of eyewear **14** |
| 1501 | Left-eye illumination combiner transmission spectrum | Transmission spectrum of left-eye illumination through illumination combiner **203** |
| 1502 | Right-eye illumination combiner transmission spectrum | Transmission spectrum of right-eye illumination through illumination combiner **203** |
| 2401 | Left-eye lens transmission spectrum | Transmission spectrum of left-eye lens **2001** |
| 2402 | Right-eye lens transmission spectrum | Transmission spectrum of right-eye lens **2002** |
| 2201 | Flat lens | Prior art flat lens of the Infitec type |
| 2210 | Filter | Filter of flat lens **2201** |
| 2220 | Filter substrate | Filter substrate of flat lens **2201** |
| 2202 | Curved lens | Prior art curved lens of the Infitec type |
| 2230 | Filter | Filter of curved lens **2202** |
| 2240 | Filter substrate | Filter substrate of curved lens **2202** |
| 2000 | Lens assembly | In left-eye lens **2001** and right-eye lens **2002** |
| 2010 | Outer optical assembly | In lens assembly **2000** |
| 2005 | Geometrical surface | In lens assembly **2000** |
| 2020 | Filter | In embodiment of lens assembly **2000** |
| 2030 | Inner optical assembly | In lens assembly **2000** |
| 2040 | Eye pupil | In illustration of operation of lens assembly **2000** |
| 2021 | Filter substrate | In embodiment of lens assembly **2000** |
| 2311 | Outer lens substrate | In embodiment of lens assembly **2000** |
| 2312 | Outer diffractive surface | In embodiment of lens assembly **2000** |
| 2322 | Inner diffractive surface | In embodiment of lens assembly **2000** |
| 2321 | Inner lens substrate | In embodiment of lens assembly **2000** |

## EP 2 585 870 B1

DETAILED DESCRIPTION OF THE INVENTION

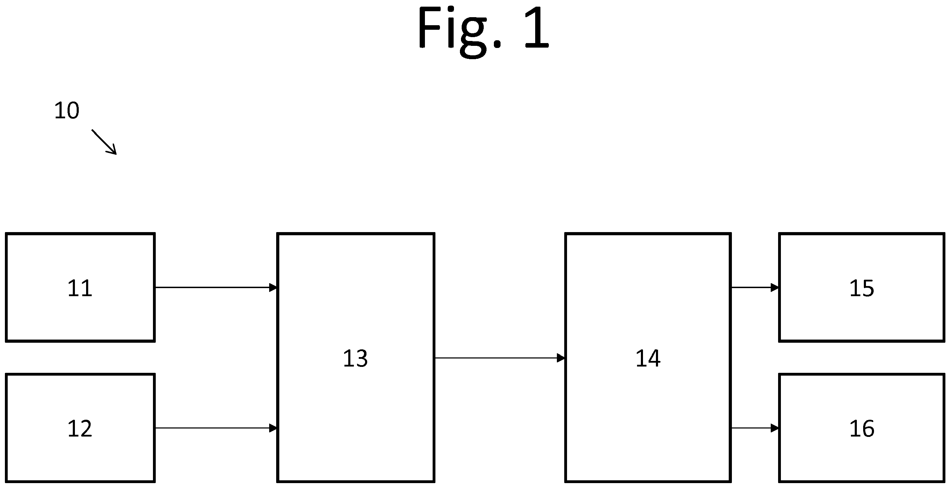

A general illustration of a stereoscopic 3D display system **10** shown in **FIG. 1.** Left image data **11** and right image data **12** are input to display unit **13.** Display unit **13** displays the left image data **11** and right image data **12** onto the same or substantially the same spatial imaging grid by means of wavelength- and time-division multiplexing. Eyewear **14** performs wavelength-selective filtering, ensuring that the left eye **15** observes the left image data **11** and the right eye **16** observes the right image data **12.**

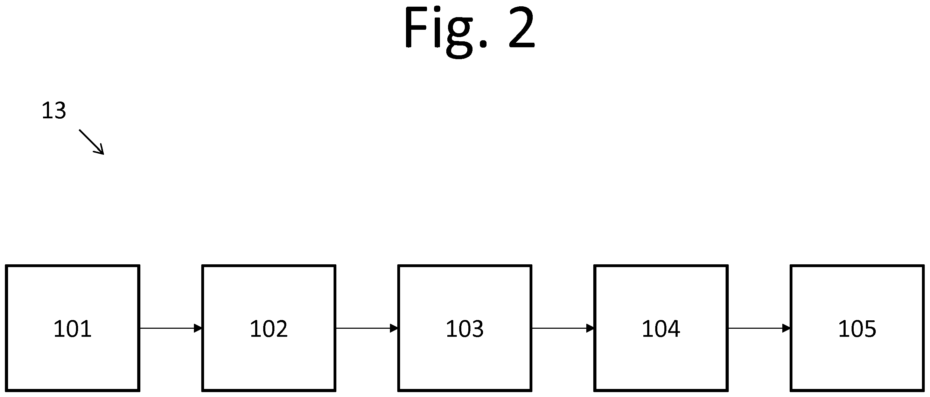

In one embodiment of the present invention, the display unit **13** is a projection display. A display unit **13** of the projection display type is illustrated in **FIG. 2.** A stereo illumination unit **101** performs wavelength- and time-division multiplexing of the illumination. Illumination optics **102** images the illumination onto one or more spatial light modulators **103.** Projection optics **104** images the surface of one or more spatial light modulators **103** onto the projection screen **105.**

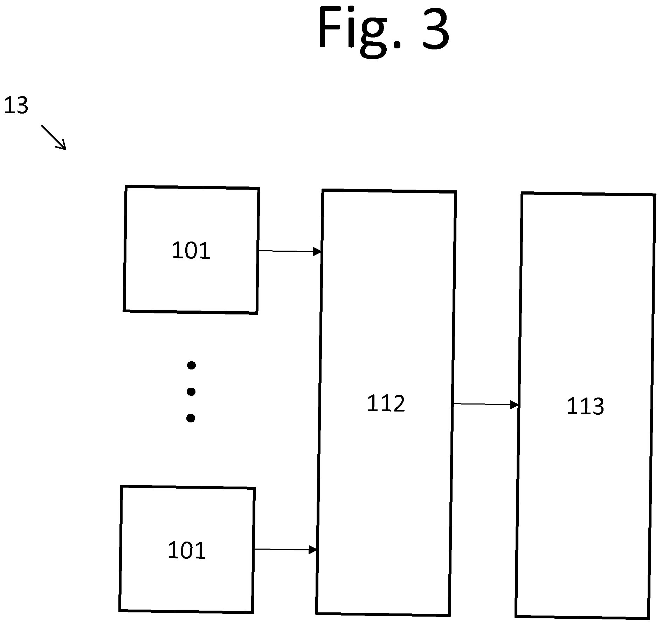

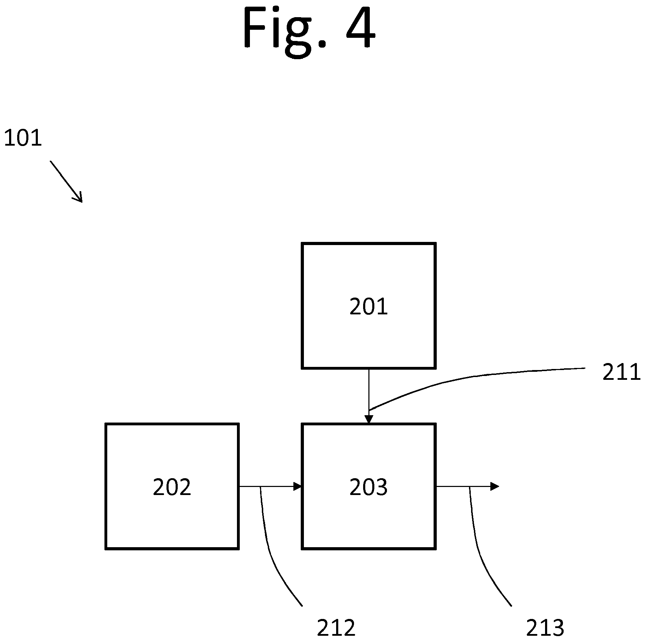

The display unit **13** may alternatively be a backlit transmissive display. A display unit **13** of the backlit transmissive type is illustrated in **FIG. 3.** One or more stereo illumination units **101** perform wavelength- and time-division multiplexing of the illumination. Backlight illumination optics **112** ensures that the illumination from stereo illumination units **101** is delivered to the rear of the transmissive display panel **113.** An exemplary embodiment of a stereo illumination unit **101** is illustrated in **FIG. 4.** Stereo illumination unit **101** performs wavelength- and time-division multiplexing of the illumination. A left-eye illumination source **201** delivers left-eye illumination **211** to illumination combiner **203.** A right-eye illumination source **202** delivers right-eye illumination **212** to the illumination combiner **203.** The illumination combiner **203** delivers left-eye illumination **211** and right-eye illumination **212** to the output illumination **213** ensuring that output illumination **213** has the same or substantially the same etendue as the left-eye illumination **211** and right-eye illumination **212.** Illumination optics **102** images the output illumination **213** onto one or more spatial light modulators **103** as indicated in **FIG. 2.**

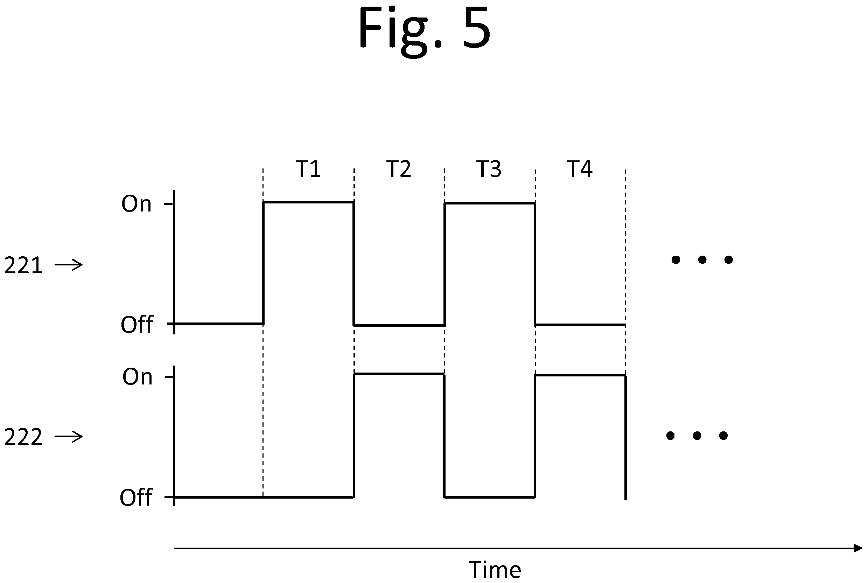

Control signals to left-eye illumination source **201** and right-eye illumination source **202,** are illustrated in **FIG. 5,** showing a time multiplexed solution. Left-eye illumination control signal **221** controls the emission of left-eye illumination **211** from left-eye illumination source **201.** Right-eye illumination control signal **222** controls the emission of right-eye illumination **212** from right-eye illumination source **202.** The left-eye illumination source **201** and right-eye illumination source **202** may preferably be individually controllable. The time-division multiplexing of said two illumination sources is done by setting the control signals **221** and **222** such that in any one time period substantially only one of the illumination sources **201** or **202** emits illumination. In **FIG. 5** this time-division multiplexing is illustrated, for 4 time intervals **T1, T2, T3** and **T4,** by left-eye illumination control signal **221** being in the 'on' state in time intervals **T1** and **T3** and right-eye illumination control signal being 'off' in these two time intervals, and by right-eye illumination control signal **222** being in the 'on' state in time intervals **T2** and **T4** and left-eye illumination control signal being 'off' in these two time intervals. Time-division multiplexing of the display of left image data **11** and right image data **12** is preferably achieved by display unit **13** displaying the left image data **11** in time intervals in which left-eye illumination control signal **221** is in the 'on' state and by display unit **13** displaying right image data **12** in time intervals in which right-eye illumination control signal **222** is in the 'on' state. Display unit **13** may display substantially only left image data **11** during time intervals in which left-eye illumination control signal **221** is in the 'on' state, and display substantially only right image data **12** during time intervals in which right-eye illumination control signal **222** is in the 'on' state. By way of example, there may be commonalities between left image data **11** and right image data **12,** and in said example there may be time intervals in which both left-eye illumination control signal **221** and right-eye illumination control signal **222** are in the 'on' state, and in said time intervals the common image data between left image data **11** and right image data **12** may be displayed, with the advantage of said example being an increased duty cycle of both illumination sources and thus increased displayed brightness.

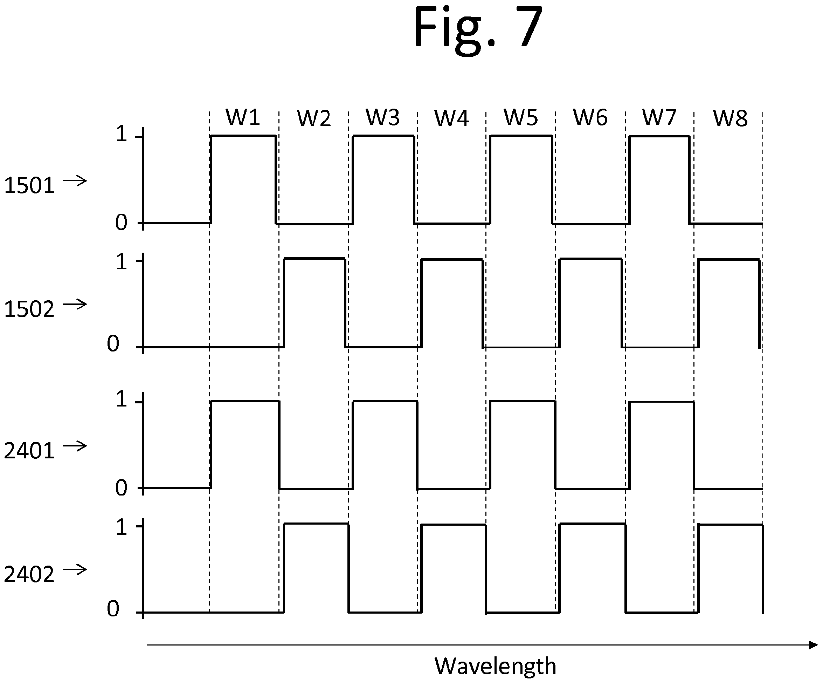

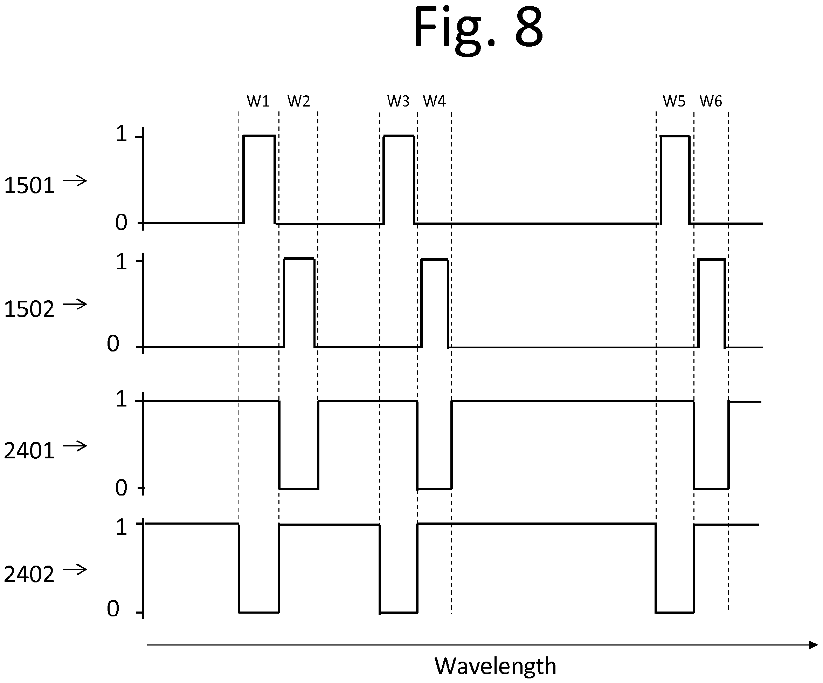

Referring to **FIG. 7** and **FIG. 8,** a wavelength-division multiplexing in stereo illumination unit **101** can be characterized by the left-eye illumination combiner transmission spectrum **1501** seen by the left-eye illumination **211** as it passes through illumination combiner **203** and is wavelength-multiplexed into the output illumination **213,** and similarly characterized by the right-eye illumination combiner transmission spectrum **1502** seen by the right-eye illumination **212** as it passes through illumination combiner **203** and is wavelength-multiplexed into the output illumination **213.** Thus, when left-eye illumination control signal **221** is in the 'on' state and right-eye illumination control signal **222** is in the 'off' state, the spectrum of output illumination **213** of stereo illumination unit **101** is exactly or approximately equal to the spectrum of left-eye illumination **211** multiplied by the left-eye illumination combiner transmission spectrum **1501.** Thus similarly, when right-eye illumination control signal **222** is in the 'on' state and left-eye illumination control signal **221** is in the 'off' state, the spectrum of output illumination **213** of stereo illumination unit **101** is exactly or approximately equal to the emission spectrum of left-eye illumination **212** multiplied by the right-eye illumination combiner transmission spectrum **1502.**

The corresponding wavelength-selective filtering in eyewear **14** can be characterized by the left-eye lens transmission spectrum **2401** of left-eye lens **2001** of eyewear **14,** and similarly characterized by the right-eye lens transmission spectrum **2402** of right-eye lens **2002** of eyewear **14.** Example embodiments of left-eye eyewear transmission spectrum **2401** and the right-eye lens transmission spectrum **2402** are also illustrated in **FIG. 7** and **FIG. 8**. These two figures will be explained in a following paragraph.

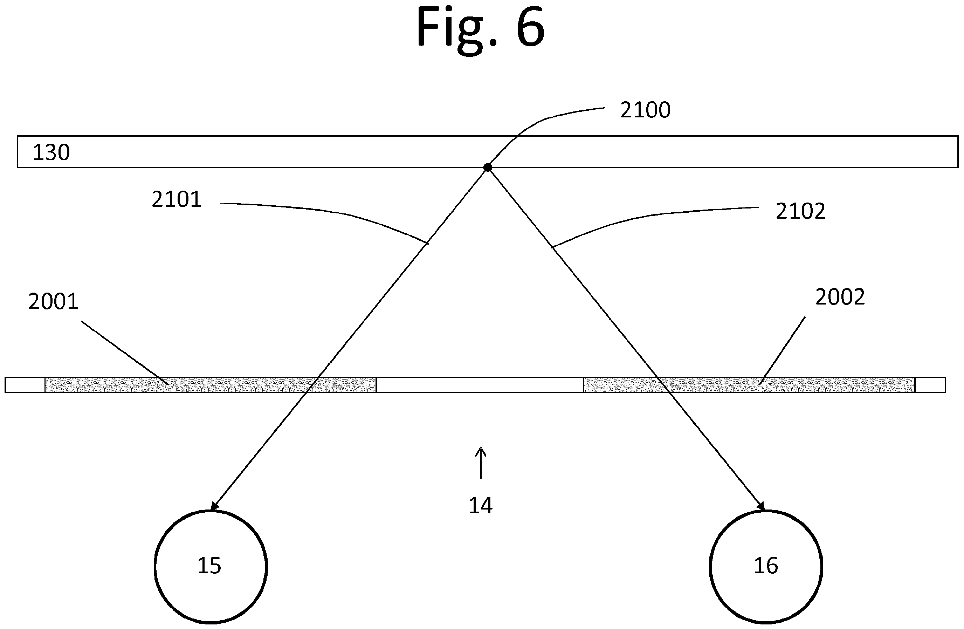

The operation of the stereoscopic 3D display system **10** can be illustrated as in **FIG. 6**. The display unit imaging surface **130** is the imaging surface of display unit **13**. In a projection display embodiment of display unit **13**, the display unit imaging surface **130** may be a front- or rear-projection projection screen. In a backlit transmissive display embodiment of display unit **13**, the display unit imaging surface **130** may be the visible surface of a transmissive display panel **113**. A spatial imaging element **2100**, or pixel, is a small region of the display unit imaging surface **130**. In one embodiment of the present invention, a spatial imaging element **2100** displays wavelength- and time-division multiplexed imaging elements from both the left image data **11** and the right image data **12**. A left-eye targeted light ray bundle **2101** is a light ray bundle, emitted from spatial imaging element **2100**, which reaches left eye **15** after being transmitted through left-eye lens **2001**. A right-eye targeted light ray bundle **2102** is a light ray bundle, emitted from spatial imaging element **2100**, which reaches right eye **16** after being transmitted through right-eye lens **2002**. The spectra, measured over the temporal integration time of the eye, of light ray bundles **2101** and **2102**, before being transmitted through lenses **2001** and **2002**, are exactly or substantially a superposition of two spectra, where the first spectrum is the spectrum of left-eye illumination **211** multiplied by left-eye illumination combiner transmission spectrum **1501** and the second spectrum is the spectrum of right-eye illumination **212** multiplied by right-eye illumination combiner transmission spectrum **1502**. According to one possible solution, the left-eye lens **2001** has transmission spectrum **2401** ensuring that the regions, of the spectrum of left-eye targeted light ray bundle **2101**, outside of the transmission bands of left-eye illumination combiner transmission spectrum **1501**, are blocked or substantially blocked in left-eye lens **2001**, thus blocking right image data **12** displayed at spatial imaging element **2100** from view of left eye **15**, and thus transmitting through left-eye lens **2001** left image data **11** displayed at spatial imaging element **2100**. Similarly, according to one possible solution, the right-eye lens **2002** has transmission spectrum **2402** ensuring that the regions, of the spectrum of right-eye targeted light ray bundle **2102**, outside of the transmission bands of right-eye illumination combiner transmission spectrum **1502**, are blocked or substantially blocked in right-eye lens **2002**, thus blocking left image data **11** displayed at spatial imaging element **2100** from view of right eye **16**, and thus transmitting through right-eye lens **2002** right image data **12** displayed at spatial imaging element **2100**. According to displays used with some embodiments of the present invention, the illumination combiner **203** has transmission spectra **1501** and **1502** that are spectrally complementary or substantially spectrally complementary and where the output illumination **213** of illumination combiner **203** has the same or substantially the same etendue as left-eye illumination **211** or right-eye illumination **212**. In displays used with some embodiments of the present invention, this etendue is preserved or substantially preserved, even with no need for or substantially no need for guard bands between the cut-on/cut-off of pass bands in transmission spectrum **1501** and the cut-off/cut-on of neighboring pass bands in transmission spectrum **1502**. Illumination combiner **203** may be of the type presented in prior art references (WO 2010/059453 A2, US 3,497,283).

Embodiments of the present invention may also be used with displays that do not have an illumination combiner **203** in stereo illumination unit **101**. Examples of such displays are filter-wheel based projection system displays (EP 1 830 585 A2) and transmissive displays of the backlit type (US 2007/0188711 A1). When used with displays not including an illumination combiner **203**, transmission spectrum **1501** may be defined as filtering the display illumination used for displaying left image data **11** and transmission spectrum **1502** may be defined as filtering the display illumination used for displaying right image data **12**.

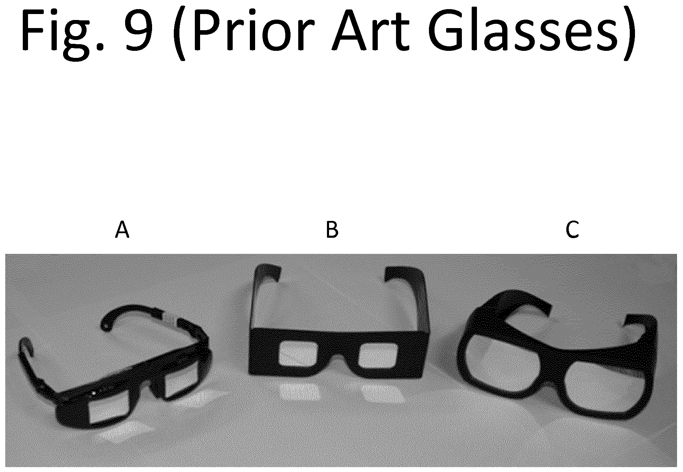

According to some embodiments of the present invention, the left-eye lens transmission spectrum **2401** is independent or substantially independent of the angle-of-incidence of the left-eye target light ray bundle **2101** to the left-eye lens **2001**. In an embodiment of the present invention, the right-eye lens transmission spectrum **2402** is independent or substantially independent of the angle-of-incidence of the right-eye target light ray bundle **2102** to the right-eye lens **2002**. This angle-independence is achieved by the left-eye lens **2001** and right-eye lens **2002** each including a lens assembly **2000**. Lens assembly **2000** and its operation is illustrated in several figures and described in following paragraphs. The substantial angle-independence of the transmission spectrum of lens assembly **2000** results in no need for or substantially no need for guard bands between the cut-on/cut-off of pass bands in transmission spectrum **1501** and the cut-off/cut-on of neighboring pass bands in transmission spectrum **1502**, and similarly the substantial angle-independence of the transmission spectrum of lens assembly **2000** results in no need for or substantially no need for guard bands between the cut-on/cut-off of pass bands in transmission spectrum **2401** and the cut-off/cut-on of neighboring pass bands in transmission spectrum **2402**. Lens assembly **2000** has a transmission spectrum angle-independence that is superior to some prior art lenses used in glasses eyewear of the Infitec type illustrated in **FIG. 9** described in WO2009/026888, EP1830585 and other references.

Returning to **FIG. 7** the spectra have substantially evenly distributed pass bands with four pass bands in each transmission spectrum. Left-eye illumination combiner spectrum **1501** has pass bands in wavelength regions **W1, W3, W5** and **W7**. Right-eye illumination combiner spectrum **1502** has pass bands in wavelength regions **W2, W4, W6** and **W8**. In the exemplary embodiment in **FIG. 7**, transmission spectra **2401** and **2402** are similar to transmission spectra **1501** and **1502**, with slight differences to take into account the small (compared to the prior art) angle-dependency, in lens assembly **2000,** of the filter implementations of transmission spectra **2401** and **2402.** Exemplary embodiments similar to the illustration in **FIG. 7** are suitable for broad-spectrum LED illumination, narrow-spectrum LED illumination and broad-spectrum lamp illumination.

As discussed in the prior art **(**US 2008/0284982 A1**),** the use of more than three pass bands in transmission spectra **1501, 1502, 2401** or **2402** can enable a larger common color gamut for displaying of both left image data **11** and right image data **12.**

An exemplary embodiment illustrated in **FIG. 8** has three narrow pass bands in each of the left-eye illumination combiner transmission spectrum **1501** and right-eye illumination combiner transmission spectrum **1502.** Transmission spectrum **1501** has pass bands in wavelength regions **W1, W3** and **W5.** Transmission spectrum **1502** has pass bands in wavelength regions **W2, W4** and **W6.** In the exemplary embodiment in **FIG. 8,** the left-eye lens transmission spectrum **2401** is a multi-notch filter with notches located in wavelength regions **W2, W4** and **W6,** and the right-eye lens transmission spectrum **2402** is a multi-notch filter with notches located in wavelength regions **W1, W3** and **W5.** Exemplary embodiments similar to the illustration in **FIG. 8** are suitable for narrow-filtered broad-spectrum LED illumination, narrow-spectrum LED illumination, narrow-filtered broad-spectrum lamp illumination and laser illumination. Exemplary embodiments similar to that illustrated in **FIG. 8** enable substantially clear viewing of off-screen objects, due to the high visible light transmission of the transmission spectra **2401** and **2402.** By way of example, a visible light transmission of 75% is possible with narrowband RGB LED illumination, and visible light transmission of greater than 90% is possible with RGB laser illumination.

Narrow guard bands between the pass bands of left-eye illumination combiner transmission spectrum **1501** and the pass bands of right-eye illumination combiner transmission spectrum **1502** ensure that there is little or no stereo crosstalk, within the manufacturing tolerances of the filter implementations of spectra **1501, 1502, 2401** and **2402** and within the small angle-dependency, in lens assembly **2000,** of the filter implementations of transmission spectra **2401** and **2402.** By way of example, an angle-shift of less than 5 degrees is possible, for filter implementations in lens assembly **2000,** for all viewing directions within $\pm 30$ degrees and for variations in interocular distance of $\pm 10$ mm and variations in focal point location of $\pm 5$ mm.

As an example, some of the above mentioned embodiments of filters **1501, 1502, 2401** and **2402** may be characterized as performing metameric wavelength-division multiplexing or metameric wavelength-division demultiplexing. Metamerism implies that two different spectra may have the same perceived color. In the case of metameric wavelength-division multiplexing, two substantially complementary spectra, each having the same or substantially the same color primaries, are combined. This principle, also in part discussed in the prior art (US 2008/0284982 A1**,** US 2007/0188711 A1), implies that stereoscopic wavelength-division multiplexing can be achieved with the same or substantially the same perceived on-screen and off-screen colors. The embodiments of the present invention are however not limited to including filters enabling metameric wavelength-division multiplexing.

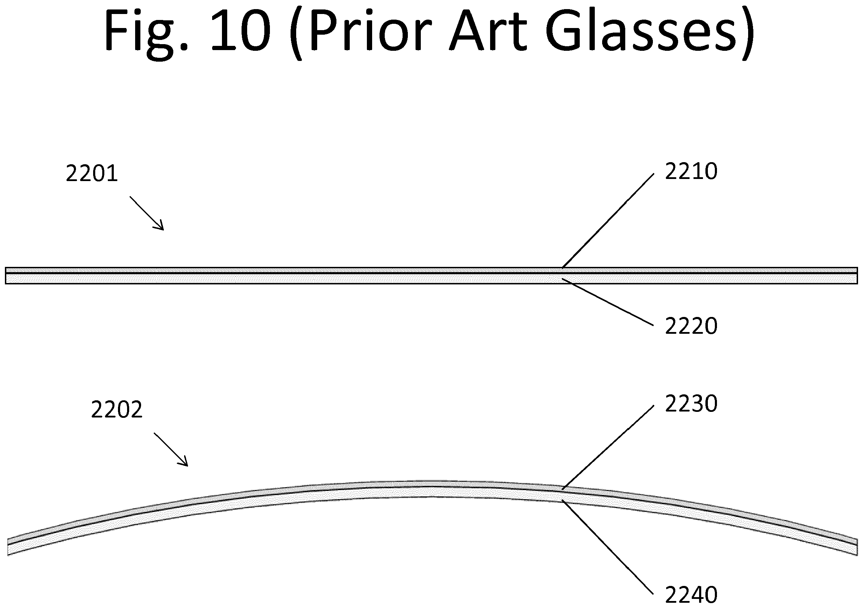

A photograph of prior art wavelength-division demultiplexing glasses for stereoscopic 3D display systems, using interference filters of the Infitec type, is shown in **FIG. 9.** These prior art glasses are of two main types: flat lens and curved lens. Flat lens glasses of the prior art are illustrated in the two leftmost glasses in **FIG. 9,** denoted by A and B. A pair of curved lens glasses of the prior art is illustrated in the rightmost glasses in **FIG. 9,** denoted by C. Due to the angle-sensitivity of the thin-film interference filters used in the prior art wavelength-demultiplexing glasses, flat lens glasses are most suited for glasses with a narrow field of view as shown in A and B in **FIG. 9.** Curved lens glasses, such as shown in C in **FIG. 9,** have an increased field of view. A schematic illustration of a radial cross-section of the lenses of the prior art glasses of both above-mentioned types is shown in **FIG. 10.** Glasses of the flat-lens type include a flat lens **2201** comprising a filter **2210** deposited on a flat filter substrate **2220.** Said filter of the Infitec type is a thin-film interference filter, but may also be a rugate notch filter or holographic notch filter (US 2007/0247709 A1). The aforementioned filters are angle-sensitive with the transmission spectrum being shifted towards shorter wavelengths with increasing angle of incidence (AOI) to the filter, and the relative wavelength shift in percent is found by

$$\Delta \lambda_{rel} = 100 \left( 1 - \sqrt{1 - \frac{\sin^2 \theta}{n^{*2}}} \right),$$

where $\theta$ is the AOI and $n^*$ is the effective refractive index. The effective refractive index of the filter is approximately the lowest refractive index or the refractive index of the lowest-index layer in the filter. For a typical multi-layer thin-film interference filter with $SiO_2$ as the lowest-index layer (refractive index 1.48 at 555 nm) the wavelength shift is approximately 1.5% for an AOI of 15 degrees, corresponding to a shift in the transmission spectrum of approximately 8.5 nm at 555 nm. Thus, for a field-of-view of 15 degrees, the filter **2210** in flat lens **2201** must have guard bands of at least 1.5% between each pass band of the left-eye transmission spectra and neighboring pass bands of the right-eye transmission spectra. For narrow-band illumination sources such as narrow-band LEDs, such a large guard band results in significant loss of brightness, with the loss of brightness increasing proportionally to the number of pass bands. Note that the relationship between AOI and relative wavelength shift is nonlinear, and for example reducing the AOI by a factor of 3 from 15 to 5 degrees results in a reduction in the relative wavelength shift by a factor of approximately 9 from approximately 1.5% to approximately 0.17%. It is thus obvious that it is desirable to reduce the AOI to the filters.

One way of reducing the AOI to the filters is to deposit said filters on a curved substrate. The curved lens **2202** of the prior art (US 2008/0278807 A1, US 2007/0236809 A1), illustrated in **FIG. 32B,** uses this approach. Glasses of the curved-lens type include a curved lens **2202** comprising a filter **2230** deposited on a curved filter substrate **2240.** If curved lens **2202** has a radius of curvature equal to the distance from the eye center of rotation to said curved lens, the AOI of all viewable light rays is approximately 0 degrees. Thus, ideally this appears to be a good solution, although such ideal lenses may be ergonomically disadvantageous due to their large curvature and/or large size. The prior art (US 2007/0236809 A1) has solutions that enable cost-effective manufacturing of uniaxially curved lenses by roll-coated deposition of dielectric multilayer filters onto a flexible substrate. For more general biaxially-curved lenses, thin-film interference filters are deposited layer by layer, in deposition systems designed for flat substrates, in a manner that is subject to an effect called runoff. Runoff implies that the thickness of these layers is reduced with increasing curvature, and thus also reduces the optical path length through the filter with increasing curvature. Such a reduction in optical path length results in a relative wavelength shift towards shorter wavelengths. An exemplary runoff at the edge of curved lenses with 50 mm diameter, and radius of curvature of 120 mm, is 1.0%. An exemplary runoff at the edge of curved lenses with 50 mm diameter, and radius of curvature of 90 mm, is 1.5%. Thus, even with a perfect curved lens with 90 mm radius of curvature at a distance of 90 mm from the pupil of the eye, there is a substantial amount of wavelength shift in the transmission spectrum. In the prior art, the stereo cross-talk is required to be on the order of 0.5 % or less to provide high-quality stereo image viewing, thus requiring many layers and costly filters. The need for a low amount of stereo cross-talk in the prior art is due to both left-eye and right-eye images being in focus when viewed through the eyewear lenses for both eyes. The above mentioned weaknesses of the prior art motivates for a new approach to designing lenses for wavelength-selective filtering in eyewear for stereoscopic 3D display systems.

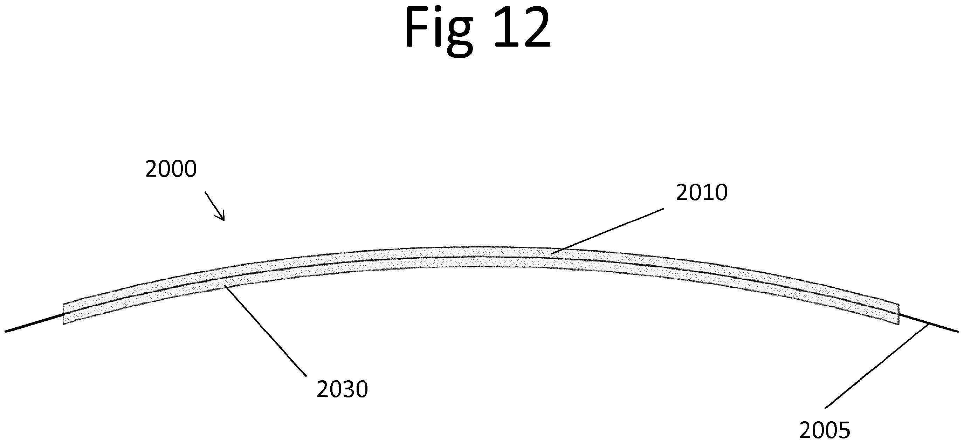

The viewing aid, according to some embodiments of the present invention, thus relates to a solution where the incident angle on the filter is adjusted so as to improve the filtering efficiency. According to one embodiment of the eyewear **14,** the left-eye lens **2001** and right-eye lens **2002** both include a lens assembly **2000,** said lens assembly being substantially flat, and said lens assembly comprising an outer optical assembly **2010** and an inner optical assembly **2030** as illustrated in **FIG. 10.** In the same figure, outer optical assembly **2010** and inner optical assembly **2030** are interfaced at geometrical surface **2005,** with geometrical surface **2005** being planar in this embodiment. In an alternative embodiment of the eyewear **14,** the left-eye lens **2001** and right-eye lens **2002** both include a lens assembly **2000,** said lens assembly having a substantial curvature, and said lens assembly comprising an outer optical assembly **2010** and an inner optical assembly **2030** as illustrated in **FIG. 12.** In the same figure, outer optical assembly **2010** and inner optical assembly **2030** are interfaced at geometrical surface **2005,** with geometrical surface **2005** having substantial curvature in this embodiment. In some embodiments of the present invention, the filter **2020** in embodiments of lens assembly **2000** included in left-eye lens **2001** has a transmission spectrum equal to or substantially similar to transmission spectrum **2401** of the left-eye lens **2001.** In some embodiments of the present invention, the filter **2020** in embodiments of lens assembly **2000** included in right-eye lens **2002** has a transmission spectrum equal to or substantially similar to transmission spectrum **2402** of the right-eye lens **2002.** In plain English, this means that the filter **2020** contributes the most to the shape of the transmission spectrum of lens assembly **2000,** and that the remaining components in optical assemblies **2010** and **2030** are substantially clear in the visible spectrum.

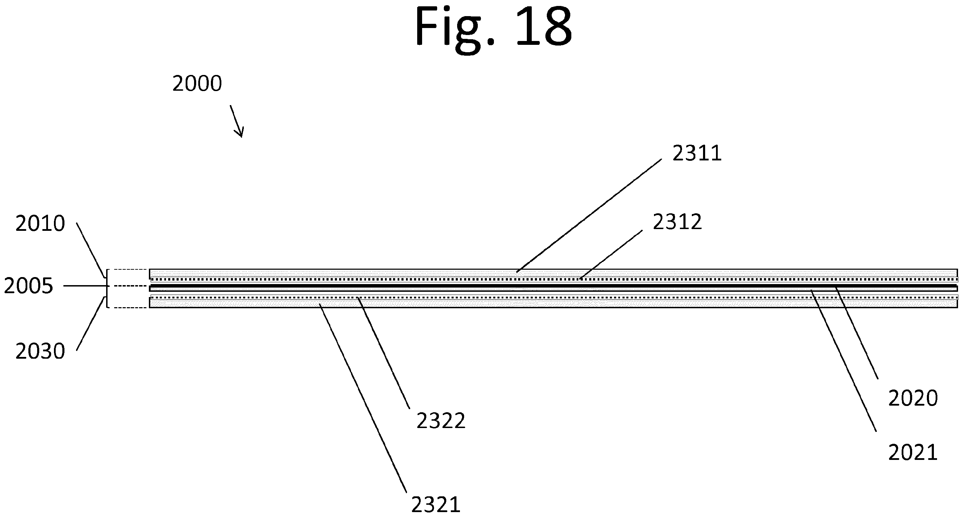

In an exemplary embodiment, of a substantially flat lens assembly **2000,** illustrated in **FIG. 18** and for illustrative purposes shown with exaggerated lens assembly thickness, outer optical assembly **2010** includes an outer lens solid **2311** and an outer diffractive surface **2312,** and inner optical assembly **2030** includes an inner lens solid **2321,** an inner diffractive surface **2322,** a filter **2020** placed on geometrical surface **2005** and a filter substrate **2021.** Said outer diffractive surface **2312** and inner diffractive surface **2322** are, in a preferred embodiment of the present invention, multi-order diffractive lenses (US 5,589,982). In a preferred embodiment of lens assembly **2000** in left-eye lens **2001,** the outer diffractive surface **2312** and inner diffractive surface **2322** are both multi-order diffractive lenses with their respective design wavelengths and diffraction orders chosen so as to provide a combined diffraction efficiency, for lens assembly **2000,** that is high for wavelength regions corresponding to passbands in display filter **1501** and low for wavelength regions corresponding to passbands in display filter **1502.** Similarly, for lens assembly **2000** in right-eye lens **2002,** the outer diffractive surface **2312** and inner diffractive surface **2322** are both multi-order diffractive lenses with their respective design wavelengths and diffraction orders chosen so as to provide a combined diffraction efficiency, for lens assembly **2000,** that is high for wavelength regions corresponding to passbands in display filter **1502** and low for wavelength regions corresponding to passbands in display filter **1501.** In plain English, this means that the design wavelength and diffraction orders, of the left-eye and right-eye multi-order diffractive lens pairs, can be chosen so as to provide a focused left-eye image and a defocused right-eye image when viewing the display through the left-eye lens, and vice-versa for the other eye. The advantage of this is a lowered requirement on the stereo extinction ratio in the filters **2020,** due to a reduction in the perceived stereo crosstalk when the opposite-eye image is viewed as a blurred out-of-focus image. A lower requirement on the stereo extinction ratio implies that fewer dielectric layers are required in filters **2020,** thus reducing the cost of manufacturing these filters.

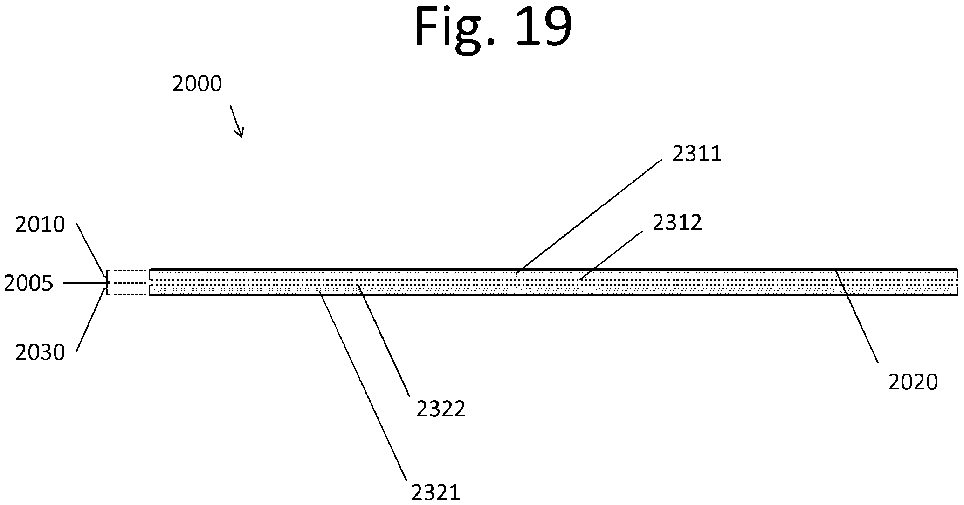

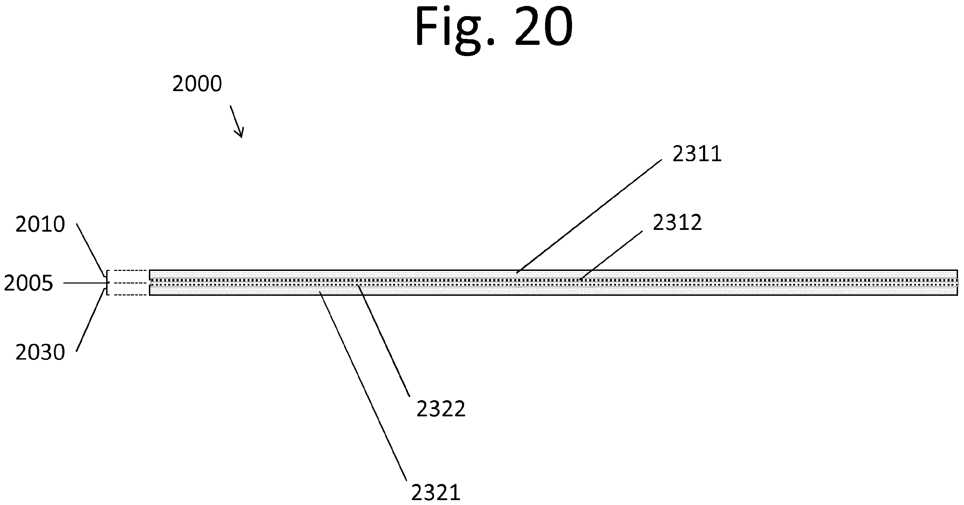

In an exemplary embodiment, of a substantially flat lens assembly **2000,** illustrated in **FIG. 19** and for illustrative purposes shown with exaggerated lens assembly thickness, outer optical assembly **2010** includes a filter **2020,** an outer lens solid **2311** and an outer diffractive surface **2312,** and inner optical assembly **2030** includes an inner lens solid **2321,** and an inner diffractive surface **2322,** with geometrical surface **2005** positioned between outer diffractive surface **2312** and inner diffractive surface **2322.** Said outer diffractive surface **2312** and inner diffractive surface **2322** are, in a preferred embodiment of the present invention, multi-order diffractive lenses (US 5,589,982). The exemplary embodiment in **FIG. 20** makes use of the reduced stereo extinction requirements described in a previous paragraph. Reduced stereo extinction requirements, and the defocusing of the opposite-eye image, enables placement of filter **2020** on the outer surface of lens solid **2311,** in applications where locally-reduced image contrast is acceptable, despite the angle-dependency of the transmission spectrum that results from this placement. The embodiment in **FIG. 19** has fewer parts and is potentially thinner than the embodiment in **FIG. 18,** which might be an advantage in some applications.

In an exemplary embodiment, of a substantially flat lens assembly **2000,** illustrated in **FIG. 20** and for illustrative purposes shown with exaggerated lens assembly thickness, outer optical assembly **2010** includes an outer lens solid **2311** and an outer diffractive surface **2312,** and inner optical assembly **2030** includes an inner lens solid **2321,** and an inner diffractive surface **2322,** with geometrical surface **2005** positioned between outer diffractive surface **2312** and inner diffractive surface **2322.** Said outer diffractive surface **2312** and inner diffractive surface **2322** are, in a preferred embodiment of the present invention, multi-order diffractive lenses (US 5,589,982). The exemplary embodiment in **FIG. 20** makes use of the reduced stereo extinction requirements described in a previous paragraph. Reduced stereo extinction requirements, and the defocusing of the opposite-eye image, enables elimination of filter **2020** from lens assembly **2000,** in applications where locally-reduced image contrast is acceptable. Compensation in left-eye image data **11** and right-eye image data **12,** using known information about the optical transfer function of the compound lenses, in lens assemblies **2000** of left-eye lens **2001** and right-eye lens **2002,** can be applied to improve the local image contrast. The embodiment in **FIG. 20** has fewer parts and is potentially thinner than the embodiment in **FIG. 18.** A further advantage of the embodiment in **FIG. 20** is the absence of a filter **2020,** thus removing the cost of depositing multi-layer dielectric filters.

Embodiments of lens assembly **2000** of the curved type may be created similarly to the embodiments of lens assembly **2000** of the flat types illustrated in **FIG. 18, FIG. 19,** or **FIG. 20,** by outer optical assembly **2010** and inner optical assembly **2030** both including a lens solid being smooth and curved on one side and similarly curved but having a diffractive surface.

Someone knowledgeable in the field will understand that embodiments of the present invention are not limited to configurations illustrated in **FIGS. 14-20,** and there are additional possible embodiments of lens assembly **2000** comprising two lenses of opposite focal length, where said lenses may be diffractive or refractive. The choice of embodiments of the present invention may depend on factors such as the trade-off chosen between manufacturing complexity and image quality.

In an embodiment of lens assembly **2000** of the present invention, including refractive or diffractive lenses, said lenses can, by way of example, be manufactured using a process where a master mold created by diamond-turning, e-beam lithography or ion-beam lithography. By way of example, such a process may be injection molding, compression molding, hot embossing, or UV-embossing using UV-curable polymers. By way of example, said diffractive lenses may each be replicated in one monolithic piece in a material such as glass or acrylic, or replicated as a micro-structure onto a premade substrate such as glass or acrylic. By way of example, said lenses have a facet height of between 0.5 $\mu$m and 30 $\mu$m.

Someone knowledgeable in the field will understand that an embodiment of the present invention may include a lens assembly **2000** manufactured in other means than by diamond-turning or n-step lithography etching of a mold, and molding of flat diffractive or refractive lenses or curved diffractive or refractive lenses. By way of example, said lens assembly may include lenses with spatially varying index of refraction, spatially varying diffraction and said lenses may be created using gradient-index materials, optical metamaterials, and replication of nano-structured patterns or volumetric holographic elements

In a preferred embodiment of the stereoscopic 3D display system **10,** the display unit **13** is a projection display and the stereo illumination unit **101** includes light-emitting diodes (LEDs) in left-eye illumination source **201** and right-eye illumination source **202** In a further variation of said embodiment, LEDs are narrow-band monochromatic LEDs. By way of example, said monochromatic LEDs are of the PT-120 type produced by Luminus Devices Ltd. An advantage of using narrow-band monochromatic LEDs is that it enables a large color gamut. A further advantage of using narrow-band monochromatic LEDs is that it enables the use of wavelength-selective filtering eyewear **14** with substantially clear glasses having a color-neutral photopically-weighted transmission of approximately 75%. Said clear glasses are enabled by left-eye illumination combiner transmission spectrum **1501,** right-eye illumination combiner transmission spectrum **1502,** left-eye lens transmission spectrum **2401** and right-eye lens transmission spectrum **2402** similar to said transmission spectra illustrated in **FIG. 8.**

In an embodiment of the stereoscopic 3D display system **10,** the display unit **13** is a projection display and the stereo illumination unit **101** includes solid-state lasers in left-eye illumination source **201** and right-eye illumination source **202.** By way of example, said solid-state lasers are solid-state semiconductor lasers. By way of example, said solid-state lasers are arrays of vertical extended cavity lasers (VECSELs) (US 7,359,420 B2). The use of lasers enables a large color gamut further enables the use of wavelength-selective filtering eyewear **14** with substantially clear glasses having a color-neutral photopically-weighted transmission of greater than 90%. Said clear glasses are enabled by left-eye illumination combiner transmission spectrum **1501,** right-eye illumination combiner transmission spectrum **1502,** left-eye lens transmission spectrum **2401** and right-eye lens transmission spectrum **2402** similar to said transmission spectra illustrated in **FIG. 8.** By way of example, said transmission spectra are obtained using multi-band pass thin-film interference filters **1002, 1003** in spectral combiner **1000** and multi-notch thin-film interference filters in filter **2020** of lens assembly **2000** in left-eye lens **2001** and right-eye lens **2002.** By way of another example, said transmission spectra **2401** and **2402** are obtained using rugate notch filters in filter **2020** of lens assembly **2000** in left-eye lens **2001** and right-eye lens **2002.** By way of another example, said transmission spectra **2401** and **2402** are obtained using holographic notch filters in filter **2020** of lens assembly **2000** in left-eye lens **2001** and right-eye lens **2002.** By way of example, an AOI of less than 5 degrees to the filters **2020,** made possible by said lens assembly **2000,** enables the use of advanced notch filters, with narrow notches, such as rugate notch filters and holographic notch filters.

In an embodiment of the stereoscopic 3D display system **10,** the display unit **13** is a projection display and spatial light modulator(s) **103** is a single spatial light modulator capable of spatial modulation of illumination and said spatial modulation is insensitive or substantially insensitive to the polarization state of said illumination. By way of example, said single spatial light modulator is a digital micro-mirror device (DMD) of the type produced by Texas Instruments Ltd., left image data **11** and right image data **12** each include three color channels, and said single spatial light modulator modulates all three said color channels of both left image data **11** and right image data **12.** Virtually flicker-free stereoscopic 3D display is possible by using LEDs in stereo illumination unit **101** and a DMD as a spatial light modulator **103** in display unit **13.** By way of example, LEDs and solid-state semiconductor lasers have switching times of 1 microsecond. By way of example, DMDs modulate on the order of 30 000 binary frames per second.

In an embodiment of the stereoscopic 3D display system **10,** the display unit **13** is a projection display and spatial light modulator(s) **103** is two or more spatial light modulators. By way of example, said spatial light modulators are a digital micro-mirror device (DMD) of the type produced by Texas Instruments Ltd.

In an embodiment of the stereoscopic 3D display system **10,** the display unit **13** is a backlit transmissive display and the stereo illumination unit **101** includes light-emitting diodes (LEDs) in left-eye illumination source **201** and right-eye illumination source **202** and where said LEDs are a substantial source of the illumination in left-eye illumination **211** and right-eye illumination **212.** In a variation of said embodiment, left-eye illumination source **201** emits left-eye illumination **211** including illumination perceived as red, illumination perceived as green and illumination perceived as blue. In a variation of said embodiment, right-eye illumination source **202** emits right-eye illumination **212** including illumination perceived as red, illumination perceived as green and illumination perceived as blue. In a further variation of said embodiment, LEDs are narrow-band monochromatic LEDs. By way of example, said monochromatic LEDs are of the PT-120 type produced by Luminus Devices Ltd. By way of example, the use of narrow-band monochromatic LEDs enables a large color gamut. Byway of example, the use of narrow-band monochromatic LEDs enables the use of wavelength-demultiplexing eyewear **14** with substantially clear glasses having a color-neutral photopically-weighted transmission of greater than 75%. By way of example, said clear glasses are enabled by left-eye illumination combiner transmission spectrum **1501,** right-eye illumination combiner transmission spectrum **1502,** left-eye lens transmission spectrum **2401** and right-eye lens transmission spectrum **2402** similar to said transmission spectra illustrated in **FIG. 8.** By way of example, said transmission spectra are obtained using multi-bandpass thin-film interference filters **1002, 1003** in spectral combiner **1000** and multi-notch thin-film interference filters in filter **2020** of lens assembly **2000** in left-eye lens **2001** and right-eye lens **2002.**

In an embodiment of the stereoscopic 3D display system **10,** the display unit **13** is a backlit transmissive display and the stereo illumination unit **101** includes solid-state lasers in left-eye illumination source **201** and right-eye illumination source **202** and where said solid-state lasers are a substantial source of the illumination in left-eye illumination **211** and right-eye illumination **212.** In a variation of said embodiment, left-eye illumination source **201** emits left-eye illumination **211** including illumination perceived as red, illumination perceived as green and illumination perceived as blue. In a variation of said embodiment, right-eye illumination source **202** emits right-eye illumination **212** including illumination perceived as red, illumination perceived as green and illumination perceived as blue. By way of example, said solid-state lasers are solid-state semiconductor lasers. By way of example, said solid-state lasers are arrays of vertical extended cavity lasers (VECSELs) (US 7,359,420 B2). The use of lasers enables a large color gamut and further enables the use of wavelength-demultiplexing eyewear **14** with substantially clear glasses having a color-neutral photopically-weighted transmission of greater than 90%. By way of example, said clear glasses are enabled by left-eye illumination combiner transmission spectrum **1501,** right-eye illumination combiner transmission spectrum **1502,** left-eye lens transmission spectrum **2401** and right-eye lens transmission spectrum **2402** similar to said transmission spectra illustrated in **FIG. 8.** By way of example, said transmission spectra are obtained using multi-band pass thin-film interference filters **1002, 1003** in spectral combiner **1000** and multi-notch thin-film interference filters in filter **2020** of lens assembly **2000** in left-eye lens **2001** and right-eye lens **2002.** By way of another example, said transmission spectra **2401** and **2402** are obtained using rugate notch filters in filter **2020** of lens assembly **2000** in left-eye lens **2001** and right-eye lens **2002.** By way of another example, said transmission spectra **2401** and **2402** are obtained using holographic notch filters in filter **2020** of lens assembly **2000** in left-eye lens **2001** and right-eye lens **2002.** By way of example, an AOI of less than 5 degrees to the filters **2020,** made possible by said lens assembly **2000,** enables the use of advanced notch filters, with narrow notches, such as rugate notch filters and holographic notch filters.

In an embodiment of the stereoscopic 3D display system **10,** the display unit **13** is a transmissive display and transmissive display panel **113** is a transmissive display panel capable of spatial modulation of illumination and said spatial modulation is insensitive or substantially insensitive to the polarization state of said illumination. By way of example, said transmissive display panel is a MEMS-panel of the digital micro shutter (DMS) type produced by Pixtronix Inc., left image data **11** and right image data **12** each include three color channels, and said transmissive display panel modulates, in a field-sequential fashion, all three said color channels of both left image data **11** and right image data **12.** Virtually flicker-free stereoscopic 3D display is possible by using LEDs or solid-state semiconductor lasers in stereo illumination unit **101** and a DMS-panel as transmissive display panel **113** in display unit **13.** By way of example, LEDs and solid-state semiconductor lasers have switching times of 1 microsecond. By way of example, the micro shutters in DMS-panels have response times in the order of 100 microseconds. By way of example, display unit **13** includes one or more stereo illumination units **101** and backlight illumination optics **112** configured as an edge-lit backlighting unit (BLU), and by further way of example this BLU is a variation of the type described in (US 2008/0019147 A1) with modifications made to accommodate one or more stereo illumination units **101.**

In an embodiment of the stereoscopic 3D display system **10,** the display unit **13** is a transmissive display and transmissive display panel **113** is a transmissive display panel capable of spatial modulation of illumination and said spatial modulation is substantially only effective for illumination of one of two orthogonal polarization states. By way of example, said transmissive display panel is a thin-film transistor liquid crystal display (TFT-LCD) panel, left image data **11** and right image data **12** each include three color channels, and said transmissive display panel modulates, in a field-sequential fashion, all three said color channels of both left image data **11** and right image data **12.** By way of example, said TFT-LCD panel has a field rate of at least 360 Hz, high enough to display at least 60 color stereo images per second. By way of example, display unit **13** includes one or more stereo illumination units **101** and backlight illumination optics **112** configured as an edge-lit backlighting unit (BLU), and by further way of example this BLU is a variation of the type described in (US 2008/0019147 A1) with modifications made to accommodate one or more stereo illumination units **101.**

In an embodiment of the stereoscopic 3D display system **10,** the display unit **13** is a transmissive display and transmissive display panel **113** is a transmissive display panel capable of spatial modulation of illumination and said spatial modulation is substantially only effective for illumination of one of two orthogonal polarization states. By way of example, said transmissive display panel is a thin-film transistor liquid crystal display (TFT-LCD) panel, left image data **11** and right image data **12** each include three color channels, said transmissive display simultaneously displays all three color channels, and said transmissive display panel modulates, in a field-sequential fashion, left image data **11** and right image data **12.** By way of example, said TFT-LCD panel has a field rate of at least 120 Hz, high enough to display at least 60 color stereo images per second. By way of example, display unit **13** includes one or more stereo illumination units **101** and backlight illumination optics **112** configured as an edge-lit backlighting unit (BLU), and by further way of example this BLU is a variation of the type described in (US 2008/0019147 A1) with modifications made to accommodate one or more stereo illumination units **101.** The possibility of pulsing LEDs at a substantially high brightness, during shorter duty cycles, enables a LED- or laser-illuminated stereoscopic 3D backlit transmissive 3-color TFT-LCD display of the present invention, using stereo illumination unit **101,** to have a substantially higher brightness than a similar LED- or laser-illuminated stereoscopic 3D displays using liquid crystal shutter glasses or switchable polarization rotators.

In a preferred embodiment of the present invention, where the display unit **13** is a transmissive display including one or more stereo illumination units **101,** the backlight illumination optics **112** is of the edge-lit type similar to that described in reference US 2010/0014027 A1**.** Referring to this reference let **AXXX** denote the numbered items in said reference. In said preferred embodiment, the edge illuminator numbered **A101** has input illumination **A401** originating from one stereo illumination unit **101** and input illumination **A402** originating from another stereo illumination unit **101.** The advantage of said preferred embodiment, as compared to edge-lit embodiments in WO 2009/026888 A1**,** is that stereo illumination unit **101** couples the left-eye illumination **211** and right-eye illumination **212** into substantially the same optical path, thus preserving etendue and doubling the amount of illumination within a given acceptance angle as compared to WO 2009/026888 A1**.**

In a preferred embodiment of the present invention, where the display unit **13** is a transmissive display including one or more stereo illumination units **101,** the backlight illumination optics **112** is of the edge-lit type similar to that described in reference US 2008/0019147 A1. Referring to this reference let **BXXX** denote the numbered items in said reference. In said preferred embodiment, locations in the LCD system **B3,** containing LEDs **B6** include LED-illuminated stereo illumination combiners **101.**

An advantage of edge-lit backlighting units is the relative simplicity and low cost. If cost issues can be resolved, an embodiment of the present invention may include a display unit **13** of the transmissive display type, where backlight illumination optics **112** is of the direct-lit type including a large number of stereo illumination units **101.** The advantage of this approach, compared to the prior art described in referenced article "Interference-Filter-Based Stereoscopic 3D LCD" is the increased brightness and illumination uniformity due to the coupling of left-eye illumination **211** and right-eye illumination **212** into substantially the same optical path, thereby preserving etendue. The advantage of direct-lit backlighting, well known in the prior art, is the possibility of very high static constrast ratios obtained by local dimming. Displays with edge-lit backlighting units typically have a static contrast ratio limited by the contrast ratio of the transmissive display panel.

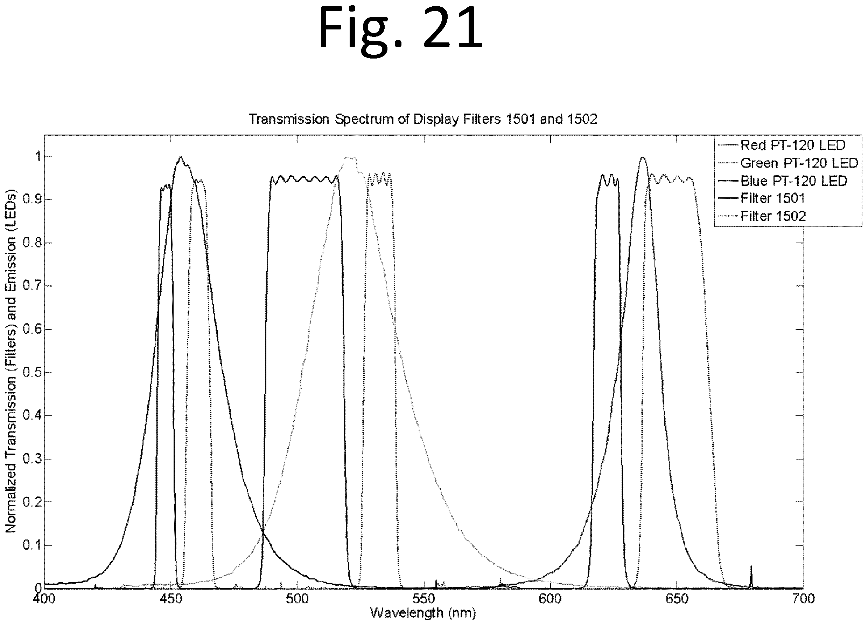

Example Filter and Diffractive Lens Set - **FIGS. 21-25**

This example filter set is intended for use with narrow-band RGB LEDs, and is optimized to provide a high visible light transmission in color-neutral glasses while still having a large stereo color gamut. This filter set has three pass bands in the left-eye display filter, three pass bands in the right-eye display filter, four pass bands in the left-eye eyewear filter and four pass bands in the right-eye eyewear filter. This filter set is illustrated by actual interference filter designs.

The transmission spectra of the left-eye display filter **1501** and right-eye display filter **1502** are shown in **FIG. 21,** together with the emission spectra of red, green and blue PT-120 LEDs (Luminus Devices Inc., MA, USA). Filters **1501** and **1502** both have three pass bands.

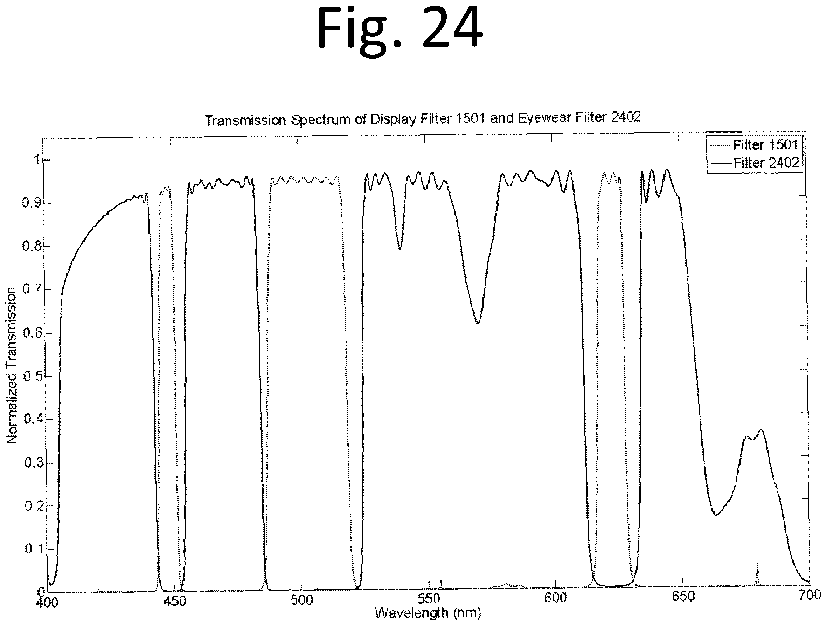

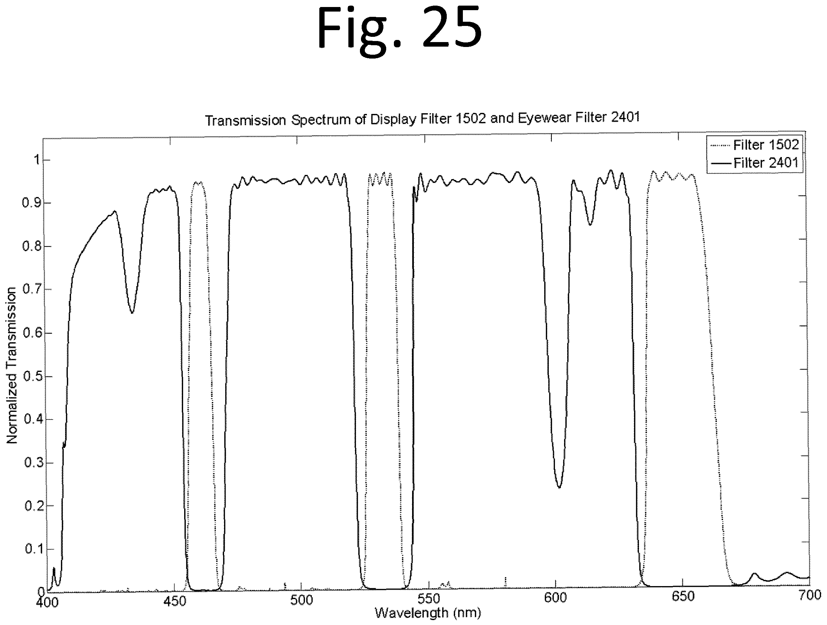

The transmission spectra of the left-eye display filter **1501** and right-eye eyewear filter **2402** are illustrated in **FIG. 24.** Eyewear filter **2402** is a triple-notch filter with four pass bands. The transmission spectra, of right-eye display filter **1502** and left-eye eyewear filter **2401,** are illustrated in **FIG. 25.** Eyewear filter **2401** is a quadruple-notch filter with four pass bands, where three of the notches block the pass bands of display filter **1502** and one notch attenuates an emission peak in fluorescent illuminants.

The left-eye color gamut is substantially similar to the right-eye color gamut. A small amount of color correction is needed, and the relative luminances of the color primaries are between 20-25 %, resulting in a stereo lumens efficiency after color correction of approximately 10 %. The filter set is designed to have an absence of substantial color distortions. Regardless of illuminant, the visible light transmission is approximately $70\pm10\%$ for all three tristimulus values. These eyewear filters enable clear viewing of off-screen objects with no substantial color distortions.

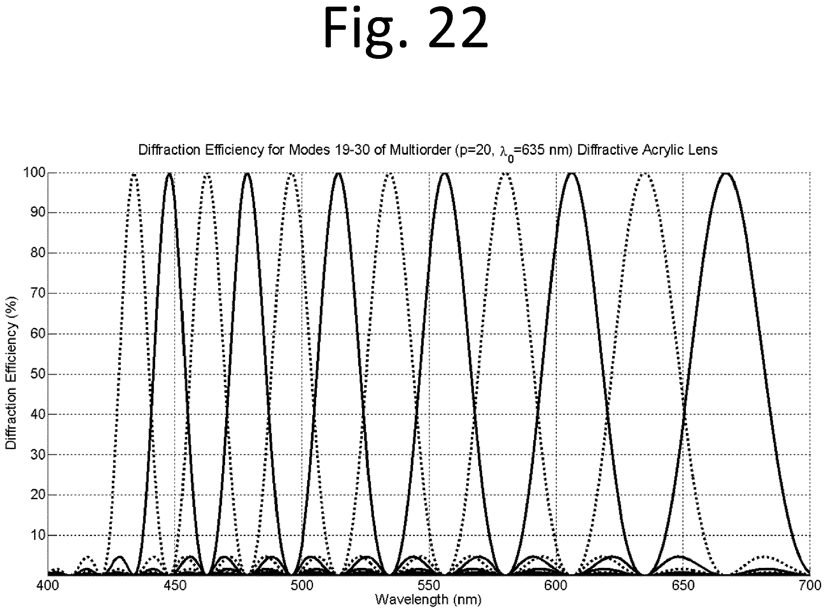

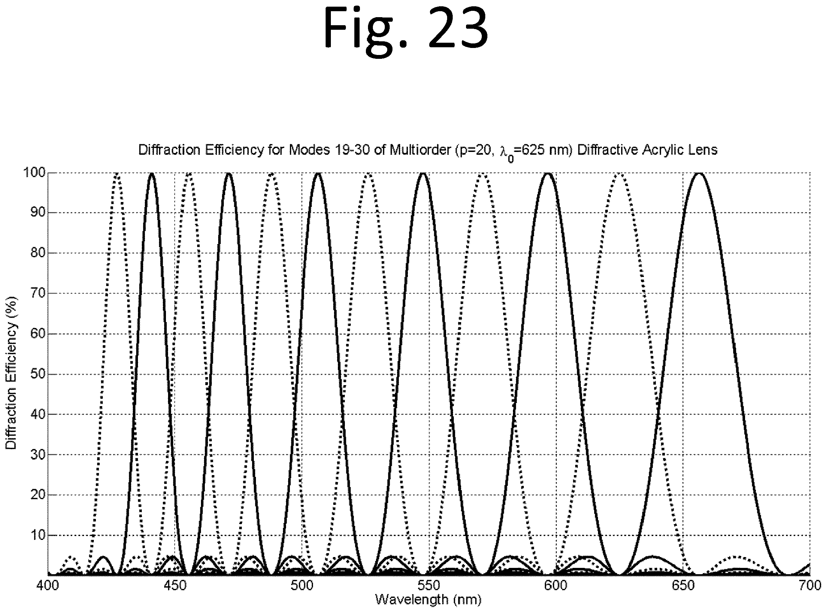

**FIG. 22** shows the diffraction efficiency of an exemplary embodiment of a multi-order diffractive lens for use in lens assembly **2000** in left-eye lens **2001.** The diffraction efficiency is near unity for all passbands in left-eye display filter transmission spectrum **1501,** and substantially reduced for all passbands in right-eye display filter transmission spectrum **1502. FIG. 23** shows the diffraction efficiency of an exemplary embodiment of a multi-order diffractive lens for use in lens assembly **2000** in right-eye lens **2002.** The diffraction efficiency is near unity for all passbands in right-eye display filter transmission spectrum **1502,** and substantially reduced for all passbands in left-eye display filter transmission spectrum **1501.** In plain English, this means that the design wavelength and diffraction orders, of the left-eye and right-eye multi-order diffractive lens pairs, can be chosen so as to provide a focused left-eye image and a defocused right-eye image when viewing the display through the left-eye lens, and vice-versa for the other eye.

A disadvantage of the glasses filters **2401** and **2402,** of the example filter set illustrated in **FIG. 24** and **FIG. 25,** is the complexity of designing notch filters with high extinction ratio. By utilizing the a lowered requirement on the stereo extinction ratio in the filters **2020,** due to a reduction in the perceived stereo crosstalk when the opposite-eye image is viewed as a blurred out-of-focus image, fewer dielectric layers are required in filters **2020** to obtain a satisfactory image quality, thus reducing the cost of manufacturing these filters. It is also understood, that in some embodiments of the present invention, the combination of the filtering means in the display, illustrated by display filter left-eye transmission spectrum **1501** and right-eye transmission spectrum **1502,** and diffractive filtering means in the viewing aid, illustrated by multi-order diffractive lens diffraction efficiencies in **FIG. 22** and **FIG. 23,** is sufficient to provide an acceptable stereoscopic image without the use of relatively costly dielectric multi-layer filters in the viewing aid. Thus, there is the possibility for both high-end and regular glasses for use with the same display filters.

Other Displays

Someone knowledgeable in the field will understand that the present invention may include display units **13** of types other than imaging projection display of **FIG. 2** or transmissive flat-panel displays of **FIG. 3.** By way of example, display unit **13** may be a of the holographic image projection type, including spatial light modulators that spatially modulate the phase of laser illumination, or both the phase and the magnitude of the laser illumination, and in said example there may be holographic projection optics that perform a Fourier transform of the phase and/or magnitude of the laser illumination spatially modulated by said spatial light modulators, so as to project said Fourier-transformed spatially-modulated laser illumination onto a viewable display surface. By way of example, said spatial light modulator(s) may be a 1D array of phase-modulating elements and a scanning device, similar to a grating light valve (GLV) but operating in a uniaxial holographic image projection mode, whereby the GLV MEMS modulates the position or state of its array elements in such a way that the Fourier transform, of laser illumination having its phase modulated by the 1D array, is equal to or substantially equal to a vertical or horizontal scan line of left image **11** or right image **12.** By way of example, said scanning device may be a mechanically rotating mirror, an oscillating resonant-mode MEMS mirror or a solid-state holographic scanning device with associated optics. By way of example, said solid-state holographic scanning device may include a second 1D array for phase modulation of laser illumination. By way of example, said spatial light modulator(s) may be 2D ferroelectric liquid crystal on silicon (FLCOS) microdisplay(s) modulating the phase of laser illumination, similar to the system developed by Light Blue Optics Ltd. By way of example, said spatial light modulator(s) may be 2D phase-modulating MEMS microdisplay, similar to the microdisplay(s) currently applied e.g. to adaptive optics systems in telescopes.

Thus to summarize, the invention relates to a stereoscopic viewing aid for viewing images received from a stereoscopic imaging system, the imaging system comprising two channels providing images having two different sets of wavelength ranges. The viewing aid comprising two filtering means, one for each eye, the first transmitting light within the first set of wavelengths and the second transmitting light within the second set of wavelengths representing the images of the two stereoscopic channels. Each of the filtering means comprises a first optical device or assembly 2010, , 2013, 2312 having a predetermined focal length at the corresponding wavelengths so as to change the incident angle of the light from the imaging system relative to a surface of the viewing aid 2005. This surface may be curved or constitute a plane surface.

According to one embodiment the first and second lenses combined are a focal system providing vision correction, so that a user may have specially designed 3D-glasses compatible to their eyes, thus eliminating the need for simultaneous use of two sets of viewing aids when watching the 3D images.

The first optical device/assembly 2010 may alternatively be provided with a first diffractive filter 2312 having a focal length within one of said sets of wavelengths while scattering light outside said set of wavelengths or diffusing the light outside the selected wavelengths. This way a filtering of said light is obtained without a dielectric filter between the lenses. Preferably this system also comprises a second optical device constituted by a second diffractive surface 2322 for essentially re-establishing the direction of the incoming light within said range of wavelengths from the imaging system. This system may also include a course dielectric filter removing most, although not all, of the light, thus reducing the requirements of the diffractive filter or dielectric filter.

As stated above, if two optical devices are used they may have opposite focal lengths or the combined focal length may be selected so as to match the eye of the individual user.

## Claims

1. Stereoscopic viewing aid (2000) for viewing images received from a stereoscopic imaging system, the imaging system comprising two channels providing images having two different sets of wavelength ranges (1501, 1502), the viewing aid comprising two filtering means, (2311) the first transmitting light within the first set of wavelengths and the second transmitting light within the second set of wavelengths, **characterised in that** each of said filtering means being constituted by a multi-order diffractive lens (2311) having a selected focal length only in the corresponding set of wavelengths while scattering or diffusing light outside said set of wavelength range..

2. Viewing aid according to claim 1, wherein each filtering means is provided with a second lens (2321) having a second focal length.

3. Viewing aid according to claim 2 wherein the second lens (2321) has a focal length being opposite of said diffractive lens (2311).

4. Viewing aid according to claim 2, wherein said second lens is a multi-order diffractive lens (2321) having a selected focal length only within the corresponding set of wavelengths.

## Patentansprüche

1. Stereoskopische Sehhilfe (2000) zum Betrachten von aus einem stereoskopischen bildgebenden System empfangenen Bildern, wobei das bildgebende System zwei Kanäle umfasst, die Bilder mit zwei verschiedenen Sätzen von Wellenlängenbereichen (1501, 1502) bereitstellen, wobei die Sehhilfe zwei Filtereinrichtungen (2311) umfasst, wobei die erste Licht innerhalb des ersten Satzes von Wellenlängen überträgt und die zweite Licht innerhalb des zweiten Satzes von Wellenlängen überträgt,

**dadurch gekennzeichnet, dass** jede der Filtereinrichtungen aus einer diffraktiven Linse (2311) mit mehreren Ordnungen mit einer ausgewählten Brennweite nur in dem entsprechenden Satz von Wellenlängen besteht, während Licht außerhalb des Satzes von Wellenlängenbereich gestreut oder diffundiert wird.

2. Sehhilfe nach Anspruch 1, wobei jede Filtereinrichtung mit einer zweiten Linse (2321) mit einer zweiten Brennweite bereitgestellt ist.

3. Sehhilfe nach Anspruch 2, wobei die zweite Linse (2321) eine der diffraktiven Linse (2311) entgegengesetzte Brennweite aufweist.

4. Sehhilfe nach Anspruch 2, wobei die zweite Linse eine diffraktive Linse (2321) mit mehreren Ordnungen mit einer ausgewählten Brennweite nur innerhalb des entsprechenden Satzes von Wellenlängen ist.

**Revendications**

1. Aide de visualisation stéréoscopique (2000) pour visualiser des images reçues d'un système d'imagerie stéréoscopique, le système d'imagerie comprenant deux canaux fournissant des images ayant deux ensembles différents de plages de longueurs d'onde (1501, 1502), l'aide de visualisation comprenant deux moyens de filtrage (2311), la première lumière de transmission dans le premier ensemble de longueurs d'onde et la seconde lumière de transmission dans le second ensemble de longueurs d'onde, **caractérisée en ce que** chacun desdits moyens de filtrage est constitué par une lentille diffractive à ordres multiples (2311) ayant une longueur focale sélectionnée uniquement dans l'ensemble correspondant de longueurs d'onde tout en dispersant ou en diffusant de la lumière à l'extérieur dudit ensemble de plages de longueurs d'onde.

2. Aide de visualisation selon la revendication 1, dans laquelle chaque moyen de filtrage est pourvu d'une seconde lentille (2321) ayant une seconde longueur focale.

3. Aide de visualisation selon la revendication 2, dans laquelle la seconde lentille (2321) a une longueur focale opposée à ladite lentille de diffraction (2311).

4. Aide de visualisation selon la revendication 2, dans laquelle ladite seconde lentille est une lentille diffractive à ordres multiples (2321) ayant une longueur focale sélectionnée uniquement dans l'ensemble correspondant de longueurs d'onde.

# Fig. 1

EP 2 585 870 B1

10

# Fig. 2

EP 2 585 870 B1

13

101 → 102 → 103 → 104 → 105

# Fig. 3

13

101

101

112

113

EP 2 585 870 B1

# Fig. 4

EP 2 585 870 B1

# Fig. 5

EP 2 585 870 B1

# Fig. 6

EP 2 585 870 B1

# Fig. 7

EP 2 585 870 B1

# Fig. 8

EP 2 585 870 B1

# Fig. 9 (Prior Art Glasses)

EP 2 585 870 B1

A          B          C

# Fig. 10 (Prior Art Glasses)

2201

2210

2220

2202

2230

2240

EP 2 585 870 B1

# Fig 11

2000

2010

2030

2005

# Fig 12

2005

2010

2030

2000

Fig. 18

2000

2311
2312

2020
2021

2322
2321

2010
2005
2030

# Fig. 19

2000

2311

2312

2010

2005

2030

2321

2322

2020

EP 2 585 870 B1

# Fig. 20

2000

2311

2312

2322

2321

2010

2005

2030

# Fig. 21

Transmission Spectrum of Display Filters 1501 and 1502

Legend:
- Red PT-120 LED
- Green PT-120 LED
- Blue PT-120 LED
- Filter 1501
- Filter 1502

Y-axis: Normalized Transmission (Filters) and Emission (LEDs)

X-axis: Wavelength (nm)

EP 2 585 870 B1

# Fig. 22

Diffraction Efficiency for Modes 19-30 of Multiorder (p=20, $\lambda_0$=635 nm) Diffractive Acrylic Lens

EP 2 585 870 B1

# Fig. 23

Diffraction Efficiency for Modes 19-30 of Multiorder (p=20, $\lambda_0$=625 nm) Diffractive Acrylic Lens

EP 2 585 870 B1

# Fig. 24

EP 2 585 870 B1

Transmission Spectrum of Display Filter 1501 and Eyewear Filter 2402

# Fig. 25

Transmission Spectrum of Display Filter 1502 and Eyewear Filter 2401

EP 2 585 870 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7001021 B2
- EP 1830585 A2
- WO 2004038457 A2
- WO 2008061511 A1
- WO 2009026888 A1
- US 20070236809 A1
- US 20080278807 A1
- WO 2010059453 A2
- US 3497283 A
- US 20070188711 A1
- WO 2009026888 A
- EP 1830585 A
- US 20080284982 A1
- US 20070247709 A1
- US 5589982 A
- US 7359420 B2
- US 20080019147 A1
- US 20100014027 A1